# EUROPÄISCHE PATENTSCHRIFT

(11) **EP 1 172 163 B1**
(45) Veröffentlichungstag und Bekanntmachung des Hinweises auf die Patenterteilung: **30.08.2006**
(21) Anmeldenummer: 01116556.0
(22) Anmeldetag: 09.07.2001
(51) Int. Cl.: B22F 3/02, B22F 5/00, B23B 27/16, B23B 51/00

(54) **Verfahren zum Pressen einer Schneidplatte**
Process for pressing a cutting insert
Procédé pour la compression d'une plaquette de coupe

(30) Priorität: 14.07.2000 AT 5162000 U
(43) Veröffentlichungstag der Anmeldung: 16.01.2002
(73) Patentinhaber: CERATIZIT Austria Gesellschaft m.b.H., 6600 Reutte /Tirol (AT)
(72) Erfinder: Huber, Ronald, 6682 Vils (AT)

(56) Entgegenhaltungen:
- WO-A-99/51426
- US-A- 4 906 294

## Beschreibung

Die Erfindung betrifft ein Verfahren zum Pressen einer Schneidplatte aus pulverförmigem Ausgangsmaterial zur Verwendung in einem Bohrer, welcher mindestens eine vom Umfang zur Drehachse des Bohrers verlaufende stimseitige Schneidkante, sowie mindestens eine seitliche Stützkante mit einer Freifläche zur Abstützung an der Bohrungswandung aufweist, wobei das Verfahren unter Verwendung einer Matrize und eines in der Matrize verfahrbaren Ober- und Unterstempels durchgeführt wird.

Derartige Schneidplatten werden im Allgemeinen bei Bohrern verwendet, welche aus einem zylindrischen Stahlschaft mit wendelförmig verdrillten Nuten zur Abfuhr des ausgebohrten Materials und aus einem Bohrkopf am Ende bestehen. Der Bohrkopf wird durch eine oder mehrere dieser Schneidplatten aus verschleißfestem Material gebildet, welche mit dem Stahlschaft in der Regel durch Löten verbunden sind.
Die Schneidplatten werden in der Regel aus Hartmetall gefertigt und werden auf pulvermetallurgischem Weg durch Pressen und Sintern einer Ausgangspulvermischung hergestellt.
Bohrer mit derartigen Schneidplatten werden vielfach zum Bohren von Gestein oder gesteinsartigem Material wie Ziegel, Beton oder Keramik eingesetzt, aber auch andere Materialien wie metallische Werkstoffe, Holz oder Kunststoff lassen sich gut bearbeiten.

Da viele Bohroperationen in zunehmendem Maße mit Akku-betriebenen Bohrmaschinen durchgeführt werden, ist zur Schonung der Akkus und zum Erreichen einer möglichst langen Betriebszeit auf eine Reduzierung der beim Bohren auftretenden Schnittkräfte zu achten, was insbesondere durch scharfe Schneidkanten, in Verbindung mit positiven Spanwinkeln der stirnseitigen Schneidkanten, erreicht wird.
Da derartige Bohrer ein Massenprodukt sind, müssen sie und damit insbesondere auch die Schneidplatten möglichst kostengünstig hergestellt werden.

In den überwiegenden Fällen wird der Bohrkopf derartiger Bohrer durch eine einzige wenige Millimeter dicke Schneidplatte mit zwei seitlichen, den Stahlschaft geringfügig überragenden Stützkanten, welche den Bohrer an der Bohrungswandung abstützen und zwei dachförmig geneigten Stirnschneidkanten, welche den eigentlichen Materialabtrag durchführen, gebildet. Aber auch andere Ausführungen wo der Bohrkopf durch mehrere Schneidplatten gebildet wird, die unter Umständen jeweils nur eine stimseitige Schneidkante sowie eine seitliche Stützkante aufweisen, sind bekannt.

Die Schneidplatten werden durch Pressen des Ausgangspulvergemisches aus dem gewünschten Material in Matrizenpressen unter Verwendung einer Matrize , eines Oberstempels und eines Unterstempels, die gegenseitig verfahrbar sind, hergestellt. Bei den am häufigsten verwendeten Pressen steht der Unterstempel still während Matrize und Oberstempel allein oder gemeinsam gegenüber dem Unterstempel verfahrbar sind. Aber auch andere Konstruktionen wo die Matrize stillsteht und Ober- und Unterstempel in der Matrize verfahrbar sind, sind üblich.
Nach dem bisher üblichen Pressverfahren erfolgt die Pressung der Schneidplatten derart, dass die Relativbewegung des Ober- und Unterstempels in Bezug auf die Matrize, in Längsrichtung der seitlichen Stützkante(n) also in Achsialrichtung der Schneidplatte erfolgt, d.h. die Schneidplatte wird "stehend" in der Matrize geformt. Der Nachteil bei dieser "stehenden" Herstellung der Schneidplatte ist, dass der Presshub des Oberstempels nicht unmittelbar bis an den Übergang Spanfläche bzw. Spanleltstufe zur Schneidkante heranreichen darf, sondern mit einem Sicherheitsabstand von etwa 0,5 mm vor diesem Übergang enden muss, um ein Verkeilen des Oberstempels in der Matrize aus Toleranzgründen mit Sicherheit auszuschließen. Auf Grund dieses Sicherheitsabstandes weist die Schneidplatte eine Negativfase von etwa 0,5 mm auf, sodass die Schneidkante keinen echten positiven Spanwinkel aufweist, da bei einer üblichen Vorschubleistung des Bohrers von etwa 0,1 mm pro Undrehung, der an die Negativfase anschließende positive Spanwinkel nicht in ausreichendem Maß zur Wirkung kommt. Auch können die Spanleitstufen an der Spanfläche der Schneidplatte nicht beliebig beispielsweise kurvenförmig und nur über einen Teil der Spanfläche verlaufend ausgeführt werden, sie müssen vielmehr gleichförmig und gerade über die gesamte Spanfläche verlaufen, da sonst der Ausstoß der Schneidplatte aus der Matrize nicht möglich wäre.
Weitere Nachteile dieser "stehenden" Herstellung der Schneidplatten sind Überpressungen oder auch unzureichende Verdichtungen an exponierten Stellen der Schneidplatte. Darüber hinaus sind exakte Verrundungen im Eckenbereich zwischen stirnseitiger Schneidkante und seitlicher Stützkante, wie sie aus Festigkeitsgründen für diesen extrem beanspruchten Teil der Schneidplatte wünschenswert wären, ebenfalls allein durch Pressen nicht herstellbar. Derartige Verrundungen ohne störende scharfkantige Übergangsbereiche könnten nur durch Schleifen hergestellt werden, was aus Kostengründen nicht tragbar ist.

Aufgabe der vorliegenden Erfindung ist es daher ein Verfahren zum Pressen einer Schneidplatte aus pulverförmigem Ausgangsmaterial zur Verwendung in Bohrern zu schaffen, bei dem die vorerwähnten Nachteile der "stehenden" Herstellung vermieden werden.

Erfindungsgemäß wird dies dadurch erreicht, dass die Relativbewegungen von Ober- und Unterstempel in der Matrize im Wesentlichen in Querrichtung der Schneidplatte parallel zu der bzw. den Freifläche(n) der Schneidplatte seitlichen Stützkante(n) erfolgt.

Auf diese Art und Weise wird die Schneidplatte im Wesentlichen "liegend" gepresst, das bedeutet der Pressling liegt dabei um den Freiwinkel der Freiflächen der seitlichen Stützkanten geneigt in der Matrize. Damit kann ein Pressling hergestellt werden bei dem der positive Spanwinkel ohne unerwünschte Negativfase bis unmittelbar an den Übergang Spanfläche zur Schneidkante heranreicht. Da die Spanleitstufe beim erfindungsgemäßen Verfahren mit dem Ober- und Unterstempel und nicht wie beim bekannten "stehenden" Verfahren durch die Form der Matrize ausgebildet wird, kann die Spanleitstufe jede beliebige Form annehmen ohne, dass es zu Ausstoßproblemen aus der Matrize kommt. Die Spanleitstufe kann jede beliebige Kurvenform aufweisen, sich nur über einen Teil der Spanfläche erstrecken und auch beliebige Erhebungen und Vertiefungen am Spanleitstufengrund aufweisen. Die Form der Spanleitstufe ist also nicht mehr aus presstechnischen Gründen vorgegeben und beschränkt, sondern kann ohne Einschränkungen mit der für eine optimale Zerspanungsleistung gewünschten Form hergestellt werden.

Darüber hinaus werden Überpressungen oder nicht ausreichende Verdichtungen an exponierten Stellen der Schneidplatte, wie sie beim "stehenden" Pressverfahren vielfach auftreten, mit Sicherheit vermieden.

Da nach dem erfindungsgemäßen Verfahren die seitlichen Freiflächen der Schneidplatte sowie die Freiflächen der stirnseitigen Schneidkanten durch die Matrize geformt werden stehen die Freiwinkel dieser Freiflächen in direkter Abhängigkeit zueinander.
Bei Schneidplatten die nach dem bekannten Verfahren stehend" gepresst werden liegt der Freiwinkel der Freiflächen der stirnseitigen Schneidkanten üblicherweise in einem Bereich zwischen 30° und 40°. Um mit dem erfindungsgemäßen Verfahren einen Freiwinkel in diesem Größenordnungsbereich zu erzielen müssten die Freiwinkel der Freiflächen der seitlichen Stützkanten in einem Bereich von über 50° liegen, wodurch die ausreichende Stabilität der seitlichen Stützkanten nicht mehr gewährleistet wäre.

Beim erfindungsgemäßen Verfahren hat es sich daher bewährt die Freiwinkel der Freiflächen der seitlichen Stützkanten innerhalb eines Bereiches von 10° bis 15° auszuführen. Damit ergibt sich eine ausreichende Stabilität der seitlichen Stützkanten. Die aus diesen Freiwinkeln resultierenden Freiwinkel der Freiflächen der stirnseitigen Schneidkanten liegen damit in einem Bereich zwischen 5° und 10°, der überraschenderweise in den meisten Fällen für eine gute Zerspanungsleistung ausreichend ist.

Da der Übergang der stirnseitigen Schneidkanten zu den seitlichen Stützkanten nach dem erfindungsgemäßen Verfahren von der Matrize geformt wird ist es möglich und von Vorteil diesen Übergang beliebig zu verrunden was die Stabilität dieser Zone erheblich verbessert.

Mit den bisher üblichen Pressverfahren wäre die Herstellung derartiger Verrundungen nur mit scharfkantigen Übergangsabschnitten möglich, welche eine starke Bruchgefährdung für die Scheidplatte ergeben, oder aber die Verrundungen müssten nach dem Pressen angeschliffen werden, was aus Kostengründen für derartige Massenprodukte in der Regel ausscheidet.

Ebenso ist es zweckmäßig beim erfindungsgemäßen Pressverfahren an der Bodenfläche der Schneidplatte Fasen mit verrundeten Längskanten vorzusehen. Diese Maßnahme dient der Verbesserung beim Einschieben der Schneidplatte in den Aufnahmeschlitz des Bohrerschaftes, wo zur Fixierung der Schneidplatte und zu ihrer exakten Positionierung, für die Einhaltung eines gleichmäßigen Abstandes von der Schlitzwandung zur Ausbildung einer guten Lötverbindung, Positionierungsnoppen vorgesehen sind. Diese Positionierungsnoppen könnten beim Einschieben herkömmlich hergestellter Schneidplatten, die lediglich eine Anfasung ohne Verrundung der Längskanten aufweisen, abgeschert werden, was zu schlecht positionierten und zu schlecht verlöteten Schneidplatten und damit zu einem Ausschuss des Bohrers führt.

Im Folgenden wird die Erfindung an Hand von Figuren näher erläutert.

Es zeigen:
- Figur 1: die Prinzipzeichnung eines Pressverfahrens nach dem Stand der Technik für eine Bohrerschneidplatte.
- Figur 2: die Prinzipzeichnung eines erfindungsgemäßen Pressverfahrens für eine Bohrerschneidplatte.

- Figur 3: eine nach dem erfindungsgemäßen Verfahren hergestellte Bohrerschneidplatte in Vorderansicht.
- Figur 4: die Bohrerschneidplatte nach Figur 3 in Stirnansicht in Einbauposition in einem Bohrer.

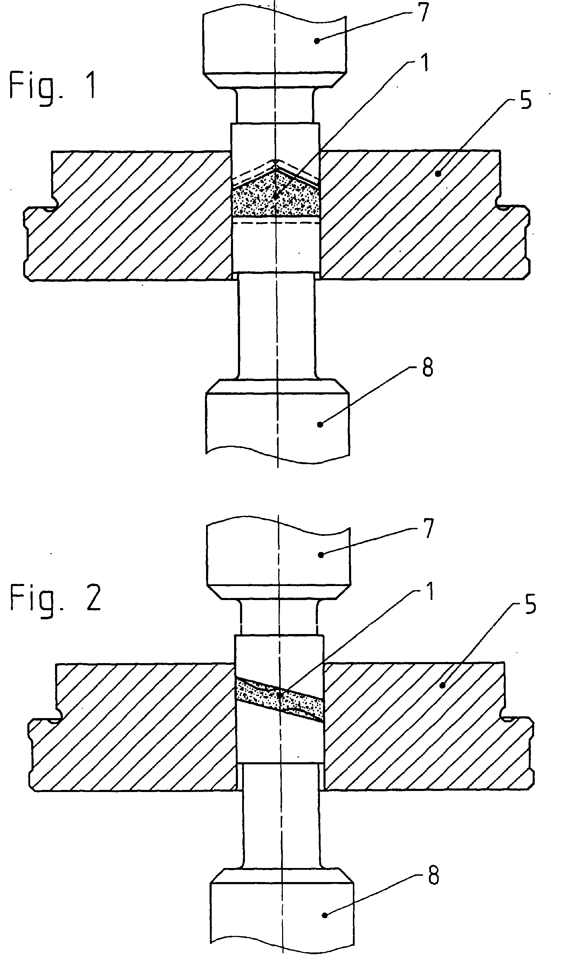

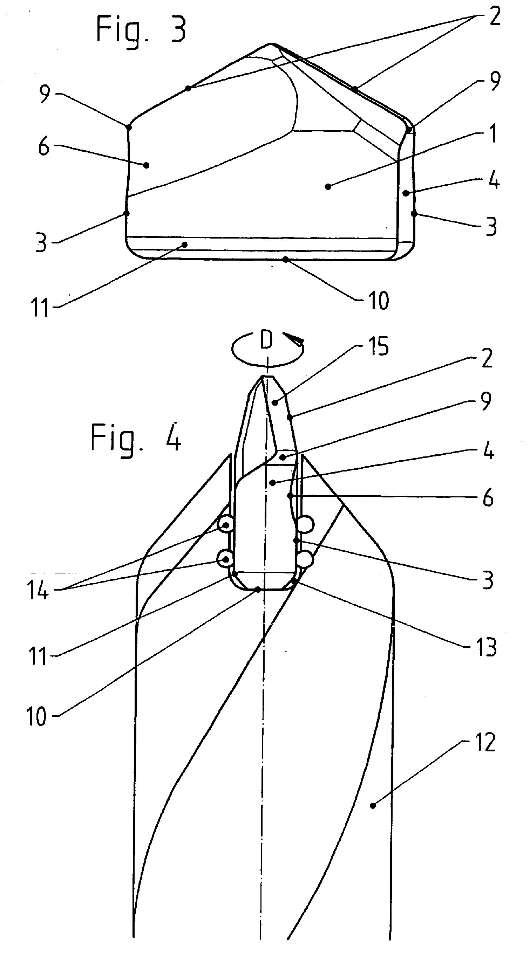

Figur 1 zeigt im Prinzip die herkömmliche Herstellung einer Bohrerplatte -1- durch Verpressen einer Ausgangspulvermischung beispielsweise aus Hartmetall. Matrize -5- Unterstempel -8- und der Oberstempel -7- sind derart aufeinander abgestimmt, dass die Schneidplatte -1- "stehend" gepresst wird, d.h. die Relativbewegung von Oberstempel -7- und Unterstempel -8- in der Matrize -5- verläuft in Achsialrichtung der Schneidplatte -1-. Beim erfindungsgemäßen Pressverfahren nach Figur 2 sind Matrize -5-, Oberstempel -7- und Unterstempel -8- derart aufeinander abgestimmt, dass die Schneidplatte -1- im Wesentlichen "liegend" in der Matrize -5- gepresst wird, d.h. die Relativbewegung von Oberstempel -7- und Unterstempel -8- zur Matrize -5- erfolgt im Wesentlichen in Querrichtung zur Schneidplatte -1-, parallel zur den Freiflächen -4- der seitlichen Stützkanten -3-, siehe auch Figuren 3 und 4. Zum Unterschied gegenüber dem herkömmlichen "stehenden" Pressverfahren werden die Spanleitstufen -6- auf den Spanflächen der Schneidplatte -1- nicht durch die Formgebung der Matrize -5- sondern durch die Formgebung des Oberstempels -7- und des Unterstempels -8- hergestellt. Damit ist man in der Wahl der Formgebung für die Spanleitstufen -6- völlig frei, ohne dass es zu Ausstoßproblemen aus der Matrize -5- kommt. In den Figuren 3 und 4 ist eine besonders vorteilhafte Form einer Schneidplatte -1 - gezeigt wie sie durch die Anwendung des erfindungsgemäßen Verfahrens herstellbar ist. Dadurch dass die Spanleitstufen -6- bis unmittelbar an die stirnseitigen Schneidkanten -2- herangeführt sind, weisen die Schneidkanten -2- positive Spanwinkel ohne eine unerwünschte Negativfase auf. Darüber hinaus weisen die Eckenbereiche -9- zwischen den stirnseitigen Schneidkanten -2- und den seitlichen Stützkanten -3- exakte Kreisform ohne störende scharfkantige Übergangsbereiche auf. Die Freiflächen -4- der seitlichen Stützkanten -3- weisen einen Freiwinkel von 15° auf, wodurch sich ein Freiwinkel der Freiflächen -15- der stirnseitigen Schneidkanten -2- von 8° ergibt. In Figur 4 ist die Schneidplatte -1- in Stirnansicht im eingebauten Zustand im Bohrerschaft -12- vor der Durchführung der Lötung, zu sehen. Die Positionierungsnoppen -14- fixieren die Schneidplatte -1- in der gewünschten Position in der Ausnehmung -13- des Bohrerschaftes -12-. Die Bodenfläche -10- der Schneidplatte -1- weist Fasen mit verrundete Längskanten -11- auf wodurch ein Abscheren der Positionierungsnoppen -14- und damit eine schlecht positionierte Schneidplatte -1- im Bohrerschaft -12- vermieden werden.

## Patentansprüche

1. Verfahren zum Pressen einer Schneidplatte (1) aus pulverförmigem Ausgangsmaterial zur Verwendung in einem Bohrer (12), welche mindestens eine vom Umfang zur Drehachse D des Bohrers (12) verlaufende stirnseitige Schneidkante (2) sowie mindestens eine seitliche Stützkante (3) mit einer Freifläche (4) zur Abstützung an der Bohrungswandung aufweist, wobei das Verfahren unter Verwendung einer Matrize (5), eines Oberstempels (7) und eines Unterstempels (8) die gegenseitig verfahrbar sind, durchgeführt wird,
**dadurch gekennzeichnet,**
**dass** die Relativbewegungen von Oberstempel (7) und Unterstempel (8) zur Matrize (5) im Wesentlichen in Querrichtung der Schneidplatte (1) parallel zu der bzw. den Freifläche(n) (4) der seitlichen Stützkante(n) (3) erfolgt.

2. Verfahren zum Pressen einer Schneidplatte (1) Anspruch 1,
**dadurch gekennzeichnet, dass** der Freiwinkel der Freifläche(n) (4) der seitlichen Stützkante(n) (3) in einem Bereich zwischen 10° und 15° liegt.

3. Verfahren zum Pressen einer Schneidplatte (1) Anspruch 1 oder 2, **dadurch gekennzeichnet,**
**dass** die umfangsseitigen Schneidecken (9) der stirnseitigen Schneidkanten (2) verrundet sind.

4. Verfahren zum Pressen einer Schneidplatte (1) nach einem der Ansprüche 1 bis 3, **dadurch gekennzeichnet,**
**dass** die Bodenfläche (10) der Schneidplatte (1) Fasen mit verrundete Längskanten (11) aufweist.

## Claims

1. Process for pressing a cutting insert (1) from powdery starting material for use in a drill (12), which has at least one front-side cutting edge (2) extending from the circumference to the axis of rotation D of the drill (12) and at least one lateral support edge (3) with a flank (4) for support at the drill hole wall, wherein the process is carried out using a die (5), an upper punch (7) and a lower punch (8), which punches can travel relative to one another,
**characterised in**
**that** the movements of the upper punch (7) and lower punch (8) relative to the die (5) take place substantially in the transverse direction of the cutting insert (1) parallel to the flank(s) (4) of the lateral support edge(s) (3).

2. Process for pressing a cutting insert (1) according to Claim 1,
**characterised in**
**that** the clearance angle of the flank(s) (4) of the lateral support edge(s) (3) lies in a range between 10° and 15°.

3. Process for pressing a cutting insert (1) according to Claim 1 or 2,
**characterised in**
**that** the circumferential cutting corners (9) of the front-side cutting edges (2) are rounded.

4. Process for pressing a cutting insert (1) according to any one of Claims 1 to 3,
**characterised in**
**that** the bottom surface (10) of the cutting insert (1) has chamfers with rounded longitudinal edges (11).

## Revendications

1. Procédé de compression d'une plaquette de coupe (1) en produit de base pulvérulent, qui est destinée à être utilisée dans un alésoir (12) et comprend au moins une arête de coupe frontale (2), qui s'étend de la périphérie jusqu'à l'axe de rotation D de l'alésoir (12), ainsi qu'au moins une arête d'appui latérale (3) à surface libre (4) pour permettre son appui sur la paroi de l'alésage, le procédé étant exécuté en utilisant une matrice (5), un poinçon supérieur (7) et un poinçon inférieur (8), **caractérisé en ce que** les déplacements relatifs du poinçon supérieur (7) et du poinçon inférieur (8) par rapport à la matrice (5) s'effectuent essentiellement dans la direction transversale de la plaquette de coupe (1), parallèlement à la surface ou aux surfaces libre(s) (4) de l'arête ou des arêtes d'appui latérale(s) (3)

2. Procédé de compression d'une plaquette de coupe (1) selon la revendication 1, **caractérisé en ce que** l'angle libre de la surface ou des surface(s) libre(s) (4) de l'arête ou des arêtes d'appui latérale(s) (3) est compris dans une page de 10° à 15°.

3. Procédé de compression d'une plaquette de coupe (1) selon la revendication 1 ou 2, **caractérisé en ce que** les becs de coupe (9), situés sur le côté périphérique, des arêtes de coupe frontales (2) sont arrondis.

4. Procédé de compression d'une plaquette de coupe (1) selon l'une quelconque des revendications 1 à 3, **caractérisé en ce que** la surface de base (10) de la plaquette de coupe (1) comporte des chanfreins à arêtes longitudinales arrondies (11).
